# EUROPEAN PATENT APPLICATION

(11) **EP 4 529 341 A1**
(43) Date of publication of application: **26.03.2025**
(21) Application number: 23806790.4
(22) Date of filing: 10.05.2023
(51) Int. Cl.: H04W 76/10

(54) **INTERACTION METHOD AND RELATED DEVICE**

(30) Priority: 16.05.2022 CN 202210530972
(71) Applicant: Datang Mobile Communications Equipment Co., Ltd., Beijing 100085 (CN)
(72) Inventor: GU, Xiaofei, Beijing 100085 (CN)
(74) Representative: Studio Torta S.p.A.
(86) International application number: PCT/CN2023/093309
(87) International publication number: WO 2023/221838

(57) **Abstract**

The present disclosure provides an interaction method and related device. The method includes: receiving first information sent in parallel by a plurality of first distributed unit entities (DUs) accessed by user equipment (UE); and sending, to each first DU, second information corresponding to the first DUs in parallel.

## Description

This disclosure claims priority to Chinese Patent Application No. 202210530972.6, filed to China National Intellectual Property Administration on May 16, 2022 and entitled "INTERACTION METHOD AND RELATED DEVICE", which is hereby incorporated by reference in its entirety.

### TECHNICAL FIELD

The present disclosure relates to the field of interaction technologies and, in particular, to an interaction method and related devices.

### BACKGROUND

In the 5G system, the structure of a base station evolves, and one base station includes one CU (Centralized Unit, CU) and a plurality of DUs (Distributed Unit, DU).

In interaction scenarios such as initial access of a UE (User Equipment, UE), access of the UE moving from a currently accessed DU to another DU, intra-handover of the DU, and the like, a plurality of DUs need to interact with the CU.

In exemplary technologies, the way in which the plurality of DUs interact with the CU is as follows: after the interaction between one DU and the CU is completed, the interaction between the next DU and the CU is to be completed. Assuming that an interaction time between the DU and the CU is T, an interaction time between one DU and the CU is 2T, and if the number of the DUs interacting with the CU is N, the interaction time between the plurality of DUs and the CU is 2NT.

It can be seen that the interaction time required in an interaction scenario involving the plurality of DUs and the CU is too long, which results in a long time required for achieving the objective of the interaction scenario, and therefore the efficiency of achieving the objective of the interaction scenario is low.

### SUMMARY

The present disclosure provides an interaction method and related devices, so as to solve the problem of relatively low efficiency of achieving the objective of an interaction scenario between a plurality of DUs and a CU.

In an aspect, the present disclosure provides an interaction method, applied to a centralized unit entity, and including:
receiving first information sent in parallel by a plurality of first distributed unit entities DUs accessed by a user equipment UE; and
sending, to each first DU, second information corresponding to the first DU in parallel.

As an optional implementation, before the sending, to each first DU, the second information corresponding to the first DU in parallel, further including:
determining a plurality pieces of first information to be sent to the first DUs; and
determining the second information of the first DU according to the plurality pieces of first information to be sent to the first DU.

As an optional implementation, the sending, to each first DU, the second information corresponding to the first DU in parallel, further including:
receiving a response message sent in parallel by each first DU.

As an optional implementation, the second information is an RRC reconfiguration message, and after the sending, to each first DU, the second information corresponding to the first DU in parallel, the method further includes:
receiving an RRC reconfiguration completion message sent in parallel by each first DU.

As an optional implementation, the plurality of first DUs are DUs currently accessed by the UE, and the sending, to each first DU, the second information corresponding to the first DU in parallel, the method further includes:
receiving a context modification response message of the UE sent in parallel by each first DU;
sending a context establishment request of the UE to a plurality of second DUs in parallel, where the second DUs are DUs to be accessed by the UE;
receiving a context establishment response message of the UE sent in parallel by each second DU; and
sending a radio resource control RRC reconfiguration message to each first DU in parallel.

As an optional implementation, after the sending the radio resource control RRC reconfiguration message to each first DU in parallel, further including:
receiving an RRC reconfiguration completion message sent in parallel by each second DU;
sending a context release message to each first DU in parallel; and
receiving a context release completion message sent in parallel by each first DU.

As an optional implementation, after the receiving the RRC reconfiguration completion message sent in parallel by each second DU, further including:
receiving a plurality of interaction messages sent in parallel by the second DUs;
sending the plurality of interaction messages corresponding to the second DUs to each second DU in parallel; and
receiving a response message sent in parallel by each second DU.

As an optional implementation, further including:
if the UE moves from a first cell to a second cell, allocating a first parameter corresponding to each first DU;
sending in parallel, to each first DU, the first parameter corresponding to the first DU; and
receiving a second parameter sent in parallel by each first DU, and re-establishing connection with each first DU;
where the first parameter is used for the first DU to send data to the centralized unit entity having the re-established connection with the first DU, and the second parameter is used for the centralized unit entity to send data to the first DU having the re-established connection with the centralized unit entity.

As an optional implementation, further including:
if the UE is handed over from the plurality of accessed first DUs to a plurality of third DUs, allocating a third parameter to each third DU, where each third DU and each first DU are located in the same cell;
sending in parallel, to each third DU, the third parameter corresponding to the third DU; and
receiving a fourth parameter sent in parallel by each third DU, and re-establishing connection with each first DU;
where the third parameter is used for the first DU to send data to the centralized unit entity having the re-established connection with the first DU, and the fourth parameter is used for the centralized unit entity to send data to the first DU having the re-established connection with the centralized unit entity.

In another aspect, the present disclosure further provides an interaction method, applied to a distributed unit entity, and including:
receiving an indication message sent by a user equipment UE, where the indication message is used to instruct a plurality of distributed unit entities accessed by the UE to send information to a centralized unit entity CU in parallel;
sending first information to the CU according to the indication message; and
receiving second information sent by the CU.

In another aspect, the present disclosure further provides an interaction method, applied to user equipment, and including:
sending an indication message to a plurality of distributed unit entities DUs accessed by a user equipment, where the indication message is used to instruct the plurality of DUs to send information to a centralized unit entity CU in parallel.

In another aspect, the present disclosure further provides a centralized unit entity, including: a memory, a transceiver and a processor;
where the memory is configured to store a computer program; the transceiver is configured to receive and send data under a control of the processor; and the processor is configured to read the computer program in the memory and perform the following operations:
receiving first information sent in parallel by a plurality of first distributed unit entities DUs accessed by a user equipment UE; and
sending, to each first DU, second information corresponding to the first DU in parallel.

In another aspect, the present disclosure further provides a centralized unit entity, including:
a first receiving unit, configured to receive first information sent in parallel by a plurality of first distributed unit entities DUs accessed by a user equipment UE; and
a first sending unit, configured to send, to each first DU, second information corresponding to the first DU in parallel.

In another aspect, the present disclosure further provides a distributed unit entity, including: a memory, a transceiver and a processor;
where the memory is configured to store a computer program; the transceiver is configured to receive and send data under a control of the processor; and the processor is configured to read the computer program in the memory and perform the following operations:
receiving an indication message sent by a user equipment UE, where the indication message is used to instruct a plurality of distributed unit entities accessed by the UE to send information to a centralized unit entity CU in parallel;
sending first information to the CU according to the indication message; and
receiving second information sent by the CU.

In another aspect, the present disclosure further provides a distributed unit entity, including:
a second receiving unit, configured to receive an indication message sent by a user equipment UE, where the indication message is used to instruct a plurality of distributed unit entities accessed by the UE to send information to a centralized unit entity CU in parallel; and
a second sending unit, configured to send first information to the CU according to the indication message;
the second receiving unit is further configured to receive second information sent by the CU.

In another aspect, the present disclosure further provides a user equipment, including: a memory, a transceiver and a processor;
where the memory is configured to store a computer program; the transceiver is configured to receive and send data under a control of the processor; and the processor is configured to read the computer program in the memory and perform the following operations:
sending an indication message to a plurality of distributed unit entities DUs accessed by a user equipment, where the indication message is used to instruct the plurality of DUs to send information to a centralized unit entity CU in parallel.

In another aspect, the present disclosure further provides a user equipment, including:
a third sending unit, configured to send an indication message to a plurality of distributed unit entities DUs accessed by a user equipment, where the indication message is used to instruct the plurality of DUs to send information to a centralized unit entity CU in parallel.

In another aspect, the present disclosure further provides a processor-readable storage medium, where the processor-readable storage medium stores a computer program, and the computer program is used to enable the processor to execute the above method.

The present disclosure provides an interaction method and related devices, after receiving the first information sent by the plurality of DUs in parallel, the CU sends the second information to each DU, that is, the CU interacts with the plurality of DUs in parallel, thereby saving an interaction time between the plurality of DUs and the CU, shortening a total interaction time of an interaction scenario between the plurality of DUs and the CU, and further improving the efficiency of achieving the objective of the interaction scenario between the plurality of DUs and the CU.

It should be understood that, the above-described content in the summary section is not intended to limit the critical or prominent features of embodiments of the present disclosure, nor is it intended to limit the scope of the present disclosure. Other features of the present disclosure will be easily understood by the following description.

### BRIEF DESCRIPTION OF DRAWINGS

To describe technical solutions in the present disclosure or in the related art more clearly, the following briefly introduces accompanying drawings required for describing the embodiments or the related art. Apparently, the accompanying drawings in the following description show some embodiments of the present disclosure, and other drawings may also be obtained by a person of ordinary skill in the art according to these drawings without creative efforts.
FIG. 1 is a schematic diagram of an application scenario according to an embodiment of the present disclosure.
FIG. 2 is a schematic diagram of interaction between a DU and a CU involved in the present disclosure.
FIG. 3 is another schematic diagram of interaction between a DU and a CU involved in the present disclosure.
FIG. 4 is a schematic flowchart of a centralized unit entity according to an embodiment of the present disclosure.
FIG. 5 is a schematic flowchart of a centralized unit entity according to another embodiment of the present disclosure.
FIG. 6 is a schematic flowchart of a centralized unit entity according to yet another embodiment of the present disclosure.
FIG. 7 is a schematic flowchart of a centralized unit entity according to still another embodiment of the present disclosure.
FIG. 8 is a schematic flowchart of a centralized unit entity according to further still another embodiment of the present disclosure.
FIG. 9 is a schematic flowchart of a distributed unit entity according to an embodiment of the present disclosure.
FIG. 10 is a schematic flowchart of user equipment according to an embodiment of the present disclosure.
FIG. 11 is a hardware structural schematic diagram of a centralized unit entity according to the present disclosure.
FIG. 12 is a schematic diagram of functional modules of a centralized unit entity according to the present disclosure;
FIG. 13 is a hardware structural schematic diagram of a distributed unit entity according to the present disclosure.
FIG. 14 is a schematic diagram of functional modules of a distributed unit entity according to the present disclosure.
FIG. 15 is a hardware structural schematic diagram of user equipment according to the present disclosure.
FIG. 16 is a schematic diagram of functional modules of user equipment according to the present disclosure.

### DESCRIPTION OF EMBODIMENTS

In the present disclosure, the term "and/or" describes an association relationship between associated objects, and indicates that three relationships may exist. For example, A and/or B may indicate three cases: A exists separately, A and B exist simultaneously, and B exists separately. The character '/' generally indicates an 'or' relationship between the associated objects.

The term "a plurality of" in embodiments of the present disclosure means two or more than two, and other quantifiers are similar thereto.

The following clearly and completely describes technical solutions in the embodiments of the present disclosure with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall belong to the protection scope of the present disclosure.

Embodiments of the present disclosure provide an interaction method and related devices, so as to solve the problem of relatively low efficiency of achieving the objective of an interaction scenario between a plurality of DUs and a CU.

The method and the apparatus involved in the present disclosure are based on the same application concept, and since the principle of the method and the apparatus for solving the problem is similar, the implementation of the apparatus and the method can be referred to each other, and redundant description will be omitted.

The technical solutions provided by the embodiments of the present disclosure may be applicable to various systems, especially, the 5G system. For example, the applicable system may be a global system of mobile communication (global system of mobile communication, GSM), a code division multiple access (code division multiple access, CDMA) system, and a wideband code division multiple access (wideband code division multiple access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio NR) system, etc. All these systems include a terminal device and a network device. The systems can further include a core network part, such as an Evolved Packet System (Evolved Packet System, EPS), a 5G system (5GS), and the like.

The terminal device involved in the embodiments of the present disclosure may refer to a device providing voice and/or data connectivity for a user, a handheld device having a wireless connection function, or other processing devices connected to a wireless modem, etc. In different systems, the name of the terminal device may also be different, for example, in the 5G system, a terminal device may be referred to as user equipment (User Equipment, UE). A wireless terminal device may communicate with one or more core networks (core network, CN) via radio access network (radio access network, RAN). The wireless terminal device may be a mobile terminal device, such as a mobile phone (or referred to as a "cellular" phone) and a computer having the mobile terminal device, and may be, for example, portable, pocket-sized, handheld, computer built-in, or vehicle-mounted mobile apparatuses, which exchange language and/or data with the radio access network, for example, devices such as a personal communication service (Personal Communication Service, PCS) phone, a cordless phone, a session initiated protocol (Session Initiated Protocol, SIP) phone, a wireless local loop (Wireless Local Loop, WLL) station, and personal digital assistant (Personal Digital Assistant PDA), etc. The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the present disclosure.

The network device involved in the embodiments of the present disclosure may be a base station. The base station may include a plurality of cells providing services for a terminal. Depending on the specific application scenario, a base station may also be referred to as an access point, or a device that communicates with a wireless terminal device through one or more sectors over an air interface in access network, or other names. The network device can be used to exchange a received air frame with an internet protocol (Internet Protocol, IP) packet, and serves as a router between a wireless terminal device and the rest of the access network, where the rest of the access network may include Internet protocol (IP) communication network. The network device may also coordinate management of attributes of the air interface. For example, the network device involved in the embodiments of the present disclosure may be a network device (Base Transceiver Station, BTS) in Global System for Mobile Communications (GSM) or Code Division Multiple Access (CDMA); may also be a network device (NodeB) in Wide-band Code Division Multiple Access (WCDMA); may also be an evolutional network device (evolutional Node B, eNB or e-NodeB) in the long term evolution (LTE) system, a 5G base station (gNB) in a 5G network architecture (next generation system); may also be a home evolved base station (Home evolved Node B, HeNB), a relay node, a femto base station, a pico base station, etc., which are not limited in the embodiments of the present disclosure. In some network structures, a network device may include a centralized unit (CU) node and a distributed unit (DU) node. The centralized unit and the distributed unit may also be arranged in a geographically separated manner.

A network device and a terminal device may respectively use one or more antennas to perform multi-input multi-output (Multi Input Multi Output, MIMO) transmission, and the MIMO transmission may be single-user MIMO (Single User MIMO, SU-MIMO) or multi-user MIMO (Multiple User MIMO, MU-MIMO). According to the form and the quantity of the antenna combination, the MIMO transmission may be 2D-MIMO, 3D-MIMO, FD-MIMO or massive-MIMO, and may also be diversity transmission, precoding transmission or beam forming transmission, etc.

In order to better describe the embodiments of the present disclosure, the following explains nouns appearing in the embodiments of the present disclosure.
UE: User Equipment;
DU: Distributed Unit;
gNB-DU: the next generation NodeB Distributed Unit, or a distributed unit of a 5G base station;
CU: Centralized Unit;
gNB-DU: the next generation NodeB Centralized Unit, or a centralized unit of a 5G base station;
RRC: Radio Resource Control;
F1AP: F1 application protocol;
AMF: Access and Mobility Management;
C-RNTI: a temporary identifier;
gNB-DU ID: an identifier of a distributed unit of the 5G base station;
RLC: Radio Link Control;
UL GTP TEID: a field of the uplink GPRS tunneling protocol;
GTP: GPRS Tunneling Protocol;
GPRS: General packet radio service;
UL: Uplink;
PDCP: Packet Data Convergence Protocol;
DL: Downlink;
PDU: Protocol Data Unit;
PDC: Primary Domain Controller;
PPDU: Presentation Protocol Data Unit;
NR: New Radio.

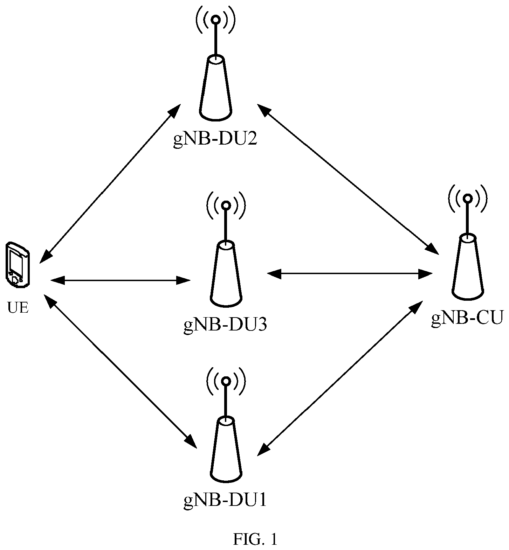

FIG. 1 is a schematic diagram of an application scenario according to an embodiment of the present disclosure. As shown in FIG. 1, the interaction method provided in this embodiment relates to UE, a plurality of gNB-DUs and a gNB-CU. The plurality of gNB-DUs are, for example, gNB-DU1, gNB-DU2, and gNB-DU3. UE accesses each gNB-DU, and the CU can send a message to each accessed gNB-DU, where the message is used to instruct each gNB-DU to send a message to the gNB-CU in parallel or in series. The parallel sending of the message refers to that the plurality of gNB-DUs send a message to the gNB-CU in the same time period. The serial sending of the message refers to that after one gNB-DU among the plurality of gNB-DUs accessed by the UE completes information interaction with the gNB-CU, another gNB-DU accessed by the UE performs information interaction with the gNB-CU again. If the plurality of gNB-DUs send a message to the gNB-CU in parallel, the gNB-CU may also send a message to the plurality of gNB-DUs in parallel. The interaction scenarios between the plurality of DUs and the CU involved in the present disclosure include initial access of the UE, inter-mobility of the gNB-DUs, and intra-handover of the gNB-DU. The initial access of the UE refers to a scenario in which the UE accesses a plurality of gNB-DUs. The inter-mobility of the gNB-DUs refers to that the UE is handed over from a plurality of accessed gNB-DUs to another plurality of gNB-DUs. The intra-handover of the gNB-DU refers to that the UE moves from one cell to another cell, and the UE switches from accessing a gNB-DU of a cell before the UE moves to accessing a gNB-DU after the UE moves; or, the intra-handover of the gNB-DU refers to that the gNB-DU accessed by the UE in a cell is handed over to another gNB-DU in the cell.

The initial access of the UE and the inter-mobility of the gNB-DUs involve many flows, and the flows of the two interaction scenarios will be described below.

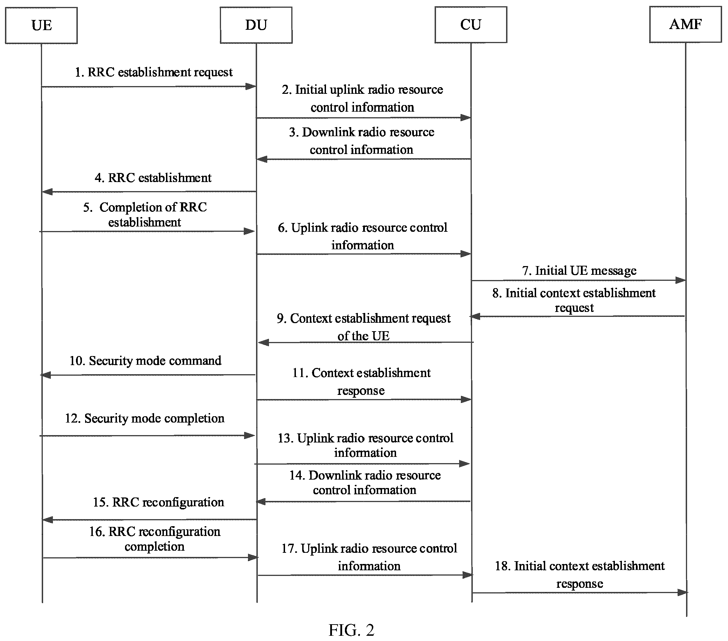

Referring to FIG. 2, the flow of the initial access of UE is as follows.
1. A UE sends an RRC establishment request to a DU (hereinafter gNB-DU is referred to as DU for short).
2. The DU transmits initial uplink radio resource control information to a CU (hereinafter gNB-CU is referred to as for short).
3. The CU transmits downlink radio resource control information to the DU.
4. RRC Setup (RRC establishment) between the DU and the UE.
5. The UE sends information about completion of radio resource control establishment to the DU.
6. The DU transmits an uplink radio resource control message to the CU.
7. The CU transmits an initial UE message to AMF.
8. The AMF sends an initial context establishment request to the CU.
9. The CU sends a context establishment request of the UE to the DU.
10. The DU sends a security mode command to the UE.
11. The DU sends a context establishment response of the UE to the CU.
12. The UE sends security mode completion to the DU.
13. The DU transmits an uplink radio resource control message to the CU.
14. The CU transmits a downlink radio resource control message to the DU.
15. The DU sends an RRC reconfiguration request to the UE.
16. The UE sends RRC reconfiguration completion information to the DU.
17. The DU transmits an uplink radio resource control message to the CU.
18. The CU sends an initial context establishment response to the AMF.

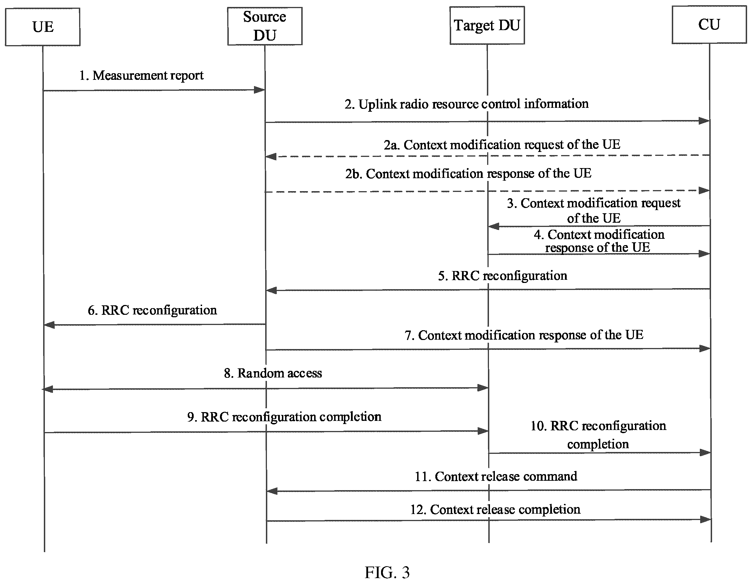

Referring to FIG. 3, the flow of the inter-mobility of the gNB-DUs is as follows.

After the UE accesses a Source gNB-DU (hereinafter referred to as a source DU for short), the CU sends downlink user data to the UE and the source DU accessed by the UE, and the UE sends downlink user data to the source DU and the CU.
1. UE sends a measurement report to a source DU.
2. The source DU transmits an uplink radio resource control message to the CU.
2a. The CU sends a context modification request of the UE to the source DU.
2b. The source DU sends a context modification response of the UE to the CU.
3. The CU sends a context modification request of the UE to a Target gNB-DU (hereinafter referred to as a target DU for short) to be accessed by the UE.
4. The target DU sends a context modification response of the UE to the CU.
5. The CU sends a context modification request of the UE to the source DU, where the context modification request is RRC reconfiguration.
6. The source DU sends an RRC reconfiguration request to the UE.
7. The source DU sends a context establishment response of the UE to the CU in a downlink data transmission state.
8. Random access process of the UE and the target DU, where in this process, the target DU transmits a message to the CU in a downlink data transmission state.
9. The UE sends an RRC reconfiguration completion message to the target DU in a downlink data transmission state.
10. The target DU transmits the RRC reconfiguration completion message to the CU.
11. The CU sends a context release command of the UE to the source DU.
12. The source DU sends a context release completion message of the UE to the CU.

It should be noted that, in FIG. 2, an example in which a DU accessed by the UE interacts with the UE and the CU is illustrated, and a process in which other DUs accessed by the UE interacts with the UE and the CU is the same as the process shown in FIG. 2. In FIG. 3, a source DU accessed by the UE and a target DU to be accessed are taken as an example for illustration, and the interaction between the UE and other accessed source DUs and the interaction involved when the UE switches to other target DUs are consistent with the flow shown in FIG. 3.

The present disclosure provides an interaction method.

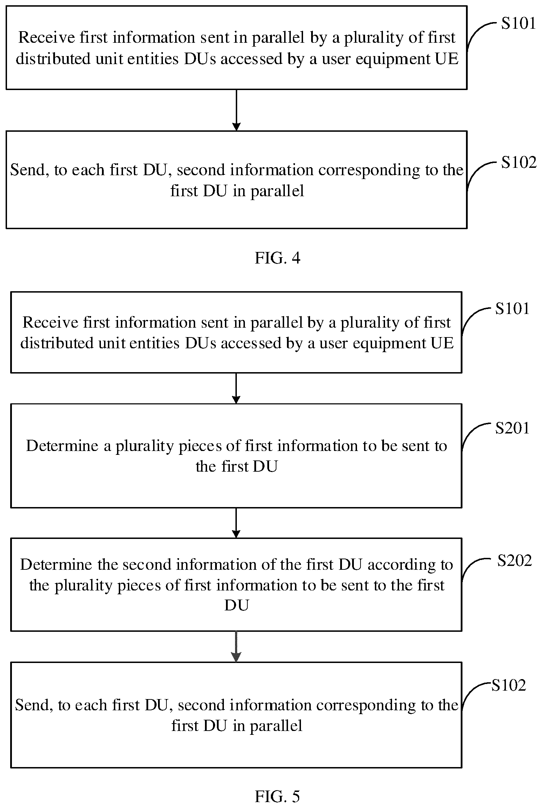

Referring to FIG. 4, FIG. 4 is a schematic flowchart of an interaction method according to an embodiment of the present disclosure, which is applied to a centralized unit entity. The method includes the following steps.

Step S101: receive first information sent in parallel by a plurality of first distributed unit entities DUs accessed by a user equipment UE.

In this embodiment, the centralized unit entity refers to an entity device of the CU, and a distributed unit entity refers to an entity device of the DU.

The UE selects a plurality of DUs for access, and a DU accessed by the UE is defined as a first DU. After the UE accesses the plurality of DUs, the plurality of DUs interact with the CU. In an interaction scenario between the plurality of first DUs and the CU, the plurality of first DUs send information to the CU in parallel, where the information is defined as first information, i.e., the CU receives the first information sent in parallel by the plurality of first DUs accessed by the UE.

After accessing the plurality of first DUs, the UE may determine that the plurality of first DUs send information to the CU in parallel or in series.

In an example, the UE sends indication information to a plurality of accessed first DUs, and if the indication information indicates that the plurality of first DUs send information to the CU in parallel, when the plurality of first DUs need to interact with the CU, the plurality of first DUs send the first information to the CU in parallel.

Step S102: send, to each first DU, second information corresponding to the first DU in parallel.

After receiving the first information sent by the plurality of first DUs in parallel, the CU sends the second information to each first DU uniformly.

In an example, if the plurality of first DUs interact with the CU in a scenario of initial access of the UE, the first information may be initial uplink radio resource control information transmitted to the CU by each first DU after the first DU receives an RRC establishment request, and the second information is downlink radio resource control information transmitted to each first DU by the CU. The initial uplink radio resource control information includes C-RNTI (temporary identifier) and gNB-DU ID allocated to each first DU by the UE, that is, each first DU sends its own C-RNTI and gNB-DU ID to the CU through first information. After receiving the first information, the CU may generate the second information, where the second information includes gNB-CU UE F1AP ID allocated by the CU and an RRC message generated by the CU. The gNB-CU UE F1AP ID refers to an identifier of the F1 application protocol between the CU and the UE, and the RRC message is radio resource control establishment information. After receiving the second information, the plurality of first DUs send the RRC message in the second information to the UE.

In another example, referring to steps 6, 9, 11, 13, 14 and 17 in FIG. 2, the interaction of the signaling between the UE and the AMF is involved, and the function of the plurality of first DUs and the CU is to encapsulate the signaling, and then transparently transmit the encapsulated signaling to the AMF or the UE, and the interaction of the signaling between the CU and the plurality of first DUs is not involved. When the first information is signaling sent by the UE to the CU via the plurality of first DUs, the second information is signaling returned by the AMF to the plurality of first DUs via the CU, and each first DU sends the received signaling sent by the AMF to the UE.

In yet another example, the initial access of the UE may involve RRC reconfiguration, that is, the second information is an RRC reconfiguration message sent by the CU to the plurality of first DUs, and each first DU sends RRC reconfiguration to the CU. After completing the RRC reconfiguration, the UE sends an RRC reconfiguration completion message to each first DU. Each first DU sends the RRC reconfiguration completion message to the CU in parallel, that is, the CU receives an RRC reconfiguration completion message sent by each first DU in parallel.

In this embodiment, after receiving the first information sent by the plurality of DUs in parallel, the CU sends the second information to each DU, that is, the CU interacts with the plurality of DUs in parallel, thereby saving an interaction time between the plurality of DUs and the CU, shortening a total interaction time of an interaction scenario between the plurality of DUs and the CU, and further improving the efficiency of achieving the objective of the interaction scenario between the plurality of DUs and the CU.

Referring to FIG. 5, FIG. 5 is a schematic flowchart of a positioning method according to another embodiment of the present disclosure. Based on the embodiment shown in FIG. 5, before step S102, the method further includes the following steps.

Step S201, determine a plurality pieces of first information to be sent to the first DU.

In this embodiment, after the UE accesses the plurality of first DUs, each first DU may interact with each other. Each first DU needs to interact with each other via the CU, that is, the first information includes a message to be sent by a first DU to other first DUs, and the first other DUs is a first DU other than the first DU sending the first information. The first information includes an identifier of the DU required to be interacted with, that is, the CU determines, according to the identifier of the DU in the first information, a plurality pieces of first information to be sent to the first DU. For example, a first DU accessed by the UE includes DU1, DU2 and DU3, message a of the DU1 carries identifiers 2 and 3, where the message a is a message sent by the DU1 to the DU2 and the DU3. Message b of the DU2 carries identifiers 1 and 3, and then the message b of the DU2 is a message sent to the DU1 and the DU3. Message c of the DU3 carries identifiers 1 and 2, and the message c of the DU3 is a message sent to the DU2 and the DU1. Therefore, respective pieces of first information to be sent to the DU1 are message b and message c, respective pieces first information to be sent to the DU2 are message a and message c, and respective pieces first information to be sent to the DU3 are message a and message b.

Step S202, determine the second information of the first DU according to the plurality pieces of first information to be sent to the first DU.

The CU integrates the plurality pieces of first information of the first DU into the second information of the first DU. For example, if respective pieces of first information to be sent to the DU1 are message b and message c, the second information of the DU1 includes the message b and the message c. If respective pieces of first information to be sent to the DU2 are message a and message c, the second information of the DU2 includes the message a and the message c. If respective pieces of first information to be sent to the DU3 are message a and message b, the second information of the DU3 includes the message a and the message b.

The plurality of first DUs perform interaction, which may be that a first DU sends the received parameter transmitted by the CU to other first DUs, where the parameter is, for example, gNB-DU UE F1AP ID and gNB-DU ID, i.e., the second information includes gNB-DU UE F1AP ID and gNB-DU ID. In addition, after receiving the second information including a parameter such as gNB-DU UE F1AP ID, gNB-DU ID or the like, each first DU sends in parallel to the CU a response indicating that the second information has been received. That is, after step S201, the method further includes: the CU receives a response message sent in parallel by each first DU, where the response message is used to prompt the first DU to respond to the second information. For example, the first DU stores gNB-DU UE F1AP ID and gNB-DU ID, and the first DU sends a response message to the CU, i.e., the response message is used to prompt that the first DU has stored gNB-DU UE F1AP ID and gNB-DU ID.

In this embodiment, if each first DU performs interaction, the CU integrates the respective pieces of first information to be sent to the first DU as the second information of the first DU, and then sends the second information of each first DU in parallel to the corresponding first DU, so as to complete interaction between the first DUs in parallel, thereby saving interaction time between the first DUs.

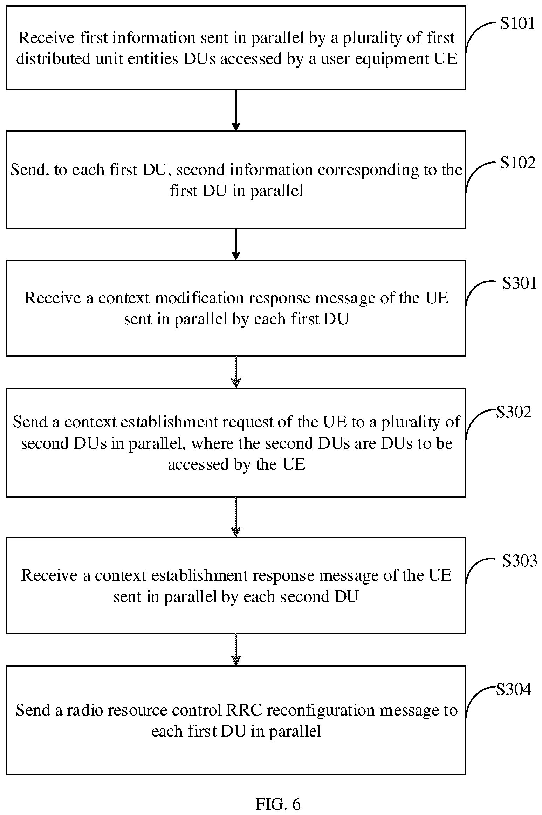

Referring to FIG. 6, FIG. 6 is a schematic flowchart of an interaction method according to yet another embodiment of the present disclosure. Based on the embodiment shown in FIG. 4 or FIG. 5, after step S102, the method further includes the following steps.

Step S301, receive a context modification response message of the UE sent in parallel by each first DU.

In this embodiment, an interaction scenario between the plurality of DUs and the CU is inter-mobility of gNB-DUs, that is, the UE is switched from accessing the plurality of first DUs to a plurality of second DUs, where the second DUs are DUs to be accessed by the UE, and the plurality of first DUs are DUs CU rrently accessed by the UE.

In this embodiment, the first information is an uplink RRC message, and the second information is a context modification request of the UE. After receiving the context modification request of the UE, each first DU sends a context modification response message of the UE to the CU in parallel, i.e., the CU receives a context modification response message of the UE sent by each first DU in parallel, i.e., each first DU notifies the CU that it has completed the context modification of the UE.

Step S302, send a context establishment request of the UE to a plurality of second DUs in parallel, where the second DUs are DUs to be accessed by the UE.

Each second DU is a DU to be accessed by the UE. After receiving the context modification response message of the UE sent by each first DU, the CU sends the context establishment request of the UE to the plurality of second DUs in parallel.

Step S303, receive a context establishment response message of the UE sent in parallel by each second DU.

After receiving the context establishment request of the UE, each second DU is connected to the UE through an identifier of the UE in the context establishment request of the UE, so that the UE accesses the plurality of second DUs, that is, each second DU completes context establishment of the UE. Context establishment of the UE refers to establishing connection between the plurality of second DUs and the UE for information transmission, and context modification of the UE refers to modifying a DU accessed by the UE.

After establishing connection with the UE, each second DU sends a context establishment response message to the CU in parallel, that is, each second DU notifies the CU that each second DU has been connected to the UE.

Step S304, send a radio resource control RRC reconfiguration message to each first DU in parallel.

After establishing connection with each second DU, the UE needs to perform RRC reconfiguration, that is, the CU sends the RRC reconfiguration message to each first DU. After receiving the RRC reconfiguration message, each first DU directly sends the RRC reconfiguration message to the UE without parsing same, i.e., the CU transparently transmits the RRC reconfiguration message to the UE via each first DU.

In an example, the UE may perform RRC reconfiguration, that is, establish radio resource control between the UE and each second DU. After completing the RRC reconfiguration, the UE sends an RRC reconfiguration completion message to each second DU. Each second DU sends an RRC reconfiguration completion message to the CU in parallel, that is, the CU receives the RRC reconfiguration completion message sent by each second DU in parallel. In this case, each first DU includes a context session with the UE. In order to free up the storage space of each first DU, the CU sends a context release message to each first DU in parallel, i.e., notifying each first DU to release the context session associated with the UE. After releasing the context session, each first DU sends a context release completion message to the CU in parallel, that is, the CU receives a context release completion message sent by each first DU in parallel.

After sending the RRC reconfiguration completion message to the CU in parallel, each second DU has established RRC connection. Each second DU can perform interaction with each other. Each second DU sends an interaction message to the CU in parallel, that is, the CU receives the interaction messages sent by the plurality of second DUs, where the interaction message includes a message to be sent by the second DU to other second DUs, and the second other DUs is a second DU other than the second DU sending the interaction information. The interaction message includes an identifier of the DU required to be interacted with, that is, the CU determines, according to the identifier of the DU in the interaction message, a plurality of interaction messages to be sent to the second DU. For example, a second DU accessed by the UE includes DU4, DU5 and DU6, message d of the DU4 carries identifiers 5 and 6, and message d is a message sent by DU4 to DU5 and DU6. Message e of DU5 carries identifiers 4 and 6, and then message e of DU5 is a message sent to DU4 and DU6. Message f of DU6 carries identifiers 4 and 5, and then message f of DU6 is a message sent to DU5 and DU4. Therefore, interaction messages to be sent to DU4 are message e and message f, interaction messages to be sent to DU5 are message d and message f, and interaction messages to be sent to DU6 are message d and message e.

The CU sends a plurality of interaction messages corresponding to the second DU to each second DU, for example, respective interaction messages sent to DU4 are message e and message f; respective interaction messages sent to DU5 are message d and message f; and respective interaction messages sent to DU6 are message d and message e.

The plurality of second DUs perform interaction, which may be that a second DU sends the received parameter transmitted by the CU to other second DUs, where the parameter is, for example, gNB-DU UE F1AP ID and gNB-DU ID, i.e., the second information includes gNB-DU UE F1AP ID and gNB-DU ID. In addition, after receiving the second information including a parameter such as gNB-DU UE F1AP ID, gNB-DU ID or the like, each second DU in parallel sends to the CU a response indicating that the second information has been received. That is, after step S504, the method further includes: the CU receives a response message sent in parallel by each second DU, where the response message is used to prompt the second DUs to respond to the second information. For example, the second DU stores gNB-DU UE F1AP ID and gNB-DU ID, and the second DU sends a response message to the CU, that is, the response message is used to prompt that the second DU has stored gNB-DU UE F1AP ID and gNB-DU ID.

In this embodiment, based on the context modification response message of the UE sent in parallel by each first DU, the CU sends the context establishment request of the UE to the plurality of second DUs in parallel, so that the UE is switched from accessing the first DUs to accessing the second DUs. Furthermore, the CU performs parallel information interaction with the plurality of first DUs, and the CU performs parallel information interaction with the plurality of second DUs, the time for the UE to switch from accessing the first DUs to accessing the second DUs is saved.

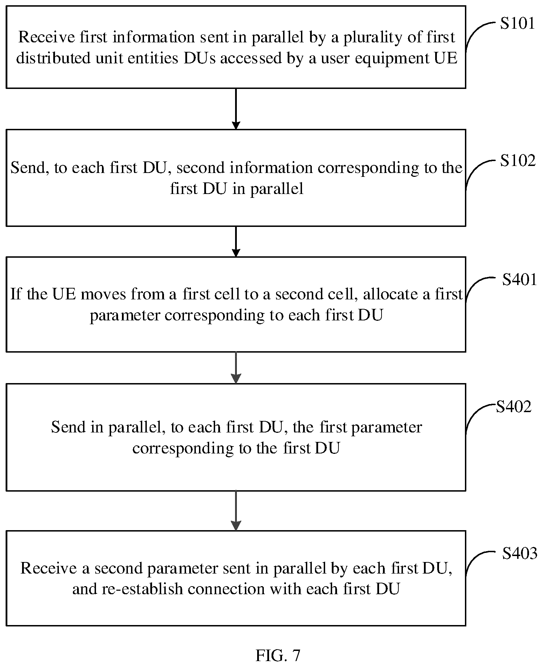

Referring to FIG. 7, FIG. 7 is a schematic flowchart of an interaction method according to still another embodiment of the present disclosure. Based on the embodiment shown in any one of FIG. 4 to FIG. 6, the interaction method further includes the following steps.

Step S401, if the UE moves from a first cell to a second cell, allocate a first parameter corresponding to each first DU.

Step S402, send in parallel, to each first DU, the first parameter corresponding to the first DU.

In this embodiment, the interaction scenario between the plurality of first DUs and the CU is intra-handover of a gNB-DU. Specifically, the UE moves from one cell (a first cell) to a second cell (a second cell), and each first DU accessed by the UE do not change, but the UE needs to change a parameter of the first cell to a parameter of the second cell. In other words, the cell where the UE is located changes, and each first DU needs to be re-established with the CU based on the cell to which the UE moves. The first cell and the second cell refer to communication cells.

When the UE interacts with the CU through the plurality of DUs, the CU can position the UE to determine a position of the UE, or an interaction information from the UE to the CU includes the position of the UE.

The CU may determine whether the UE moves to an arbitrary second cell from the first cell in which the UE is CU rrently located, based on the location of the UE. If it is detected that the UE moves from the first cell to the second cell, intra-handover of the gNB-DU needs to be performed, and in this case, the CU sends the first parameter to each first DU. The first parameter may be new UL GTP TEID of the first DUs.

Step S403, receive a second parameter sent in parallel by each first DU, and re-establish connection with each first DU.

After receiving the first parameter, each first DU may send the second parameter to the CU in parallel. The second parameter may be new DL GTP TEID provided by each first DU.

Specifically, after receiving the first parameter, i.e., after receiving new UL GTP TEID, each first DU sends the UL PDC PPDU to the CU by using the previous UL GTP TEID until RLC is re-established between the CU and the first DUs. After the RLC is established between the first DUs and the CU, the first DUs send data to the CU by using the new UL GTP TEID.

After receiving the second parameter, i.e., after receiving the new UL GTP TEID provided by each first DU, the CU sends DL PDCP PDU to each first DU by using the previous DL GTP TEID provided by each first DU, until the CU performs PDCP re-establishment or PDCP data recovery, and then the CU sends data to the first DUs by using the new DL GTP TEID of the first DUs.

It can be seen from the above that, the first parameter is used for the first DU to send data to the CU having the re-established connection with the first DU, and the second parameter is used for the CU to send data to the first DU having the re-established connection with the centralized unit entity.

It should be noted that, for ease of description, step S401 to step S403 shown in FIG. 7 are located after step S102, but step S401 to step S403 may be located at any position of step S101 and step S102.

In this embodiment, if the UE moves from the first cell to the second cell, the CU allocates a first parameter corresponding to each first DU, so that each first DU in the second cell sends data to the CU based on the first parameter, and each first DU also sends a second parameter to the CU in parallel, so that the CU sends data to each first DU in the second cell based on the second parameter.

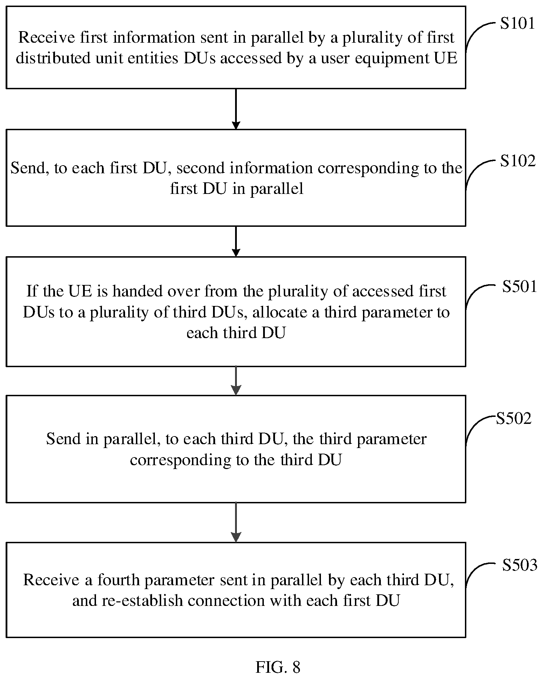

Referring to FIG. 8, FIG. 8 is a schematic flowchart of an interaction method according to further still another embodiment of the present disclosure. Based on the embodiment shown in any one of FIG. 4 to FIG. 6, the interaction method further includes the following steps.

Step S501, if the UE is handed over from the plurality of accessed first DUs to a plurality of third DUs, allocate a third parameter to each third DU.

Step S502, send in parallel, to each third DU, the third parameter corresponding to the third DU.

In this embodiment, the interaction scenario between the plurality of first DUs and the CU is intra-handover of the gNB-DU, and the intra-handover of the gNB-DU means that the UE is handed over from the plurality of accessed first DUs to the plurality of third DUs when the NR is operating, where each first DU and each third DU are located in the same cell. The third DUs are DUs to be accessed by the UE in response to the operation of the NR. In this case, the CU may allocate the third parameter to each third DU. The third parameter may be UL GTP TEID that the CU allocates for each third DU.

Step S503, receive a fourth parameter sent in parallel by each third DU, and re-establish connection with each first DU.

After receiving the third parameter, each third DU sends the fourth parameter to the CU in parallel. The fourth parameter may be new DL GTP TEID provided by each third DU.

Specifically, after receiving the third parameter, i.e., after receiving new UL GTP TEID, each third DU sends the UL PDC PPDU to the CU by using the previous UL GTP TEID until the RLC is established between the CU and the third DUs. After the RLC is established between the third DUs and the CU, the third DUs send data to the CU by using the new UL GTP TEID.

After receiving the fourth parameter, i.e., after receiving the new UL GTP TEID provided by each third DU, the CU sends DL PDCP PDU to each third DU by using the previous DL GTP TEID provided by each third DU, until the CU performs PDCP re-establishment or PDCP data recovery, and then the CU sends data to the third DUs by using the new DL GTP TEID of the third DUs.

It can be seen from the above that, the third parameter is used for the first DU to send data to the CU having the re-established connection with the first DU, and the fourth parameter is used for the CU to send data to the first DU having the re-established connection with the centralized unit entity.

It should be noted that, for ease of description, step S501 to step S503 shown in FIG. 7 are located after step S102, but step S501 to step S503 may be located at any position of step S101 and step S102.

In this embodiment, if the UE is handed over from the first DUs to the third DUs, the CU allocates a corresponding third parameter to each third DU, so that each third DU sends data to the CU based on the third parameter, and each third DU also sends a fourth parameter to the CU in parallel, so that the CU sends data to each third DU based on the fourth parameter.

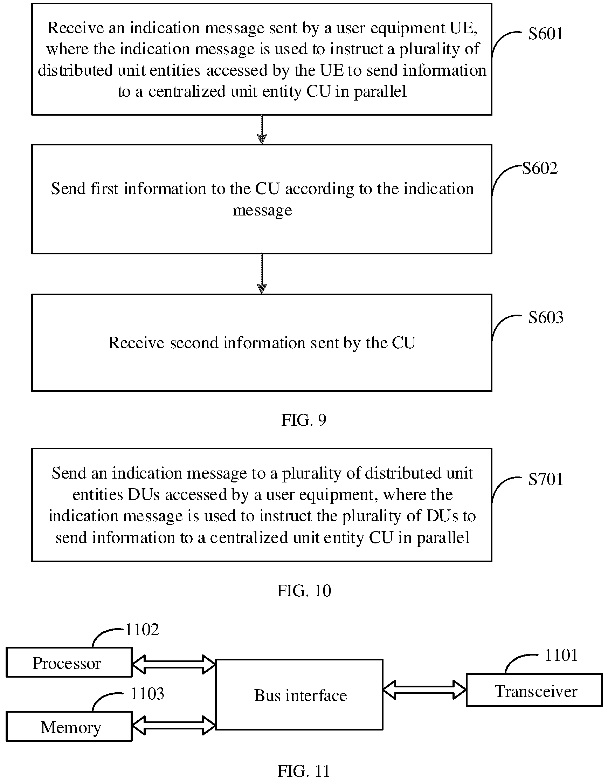

Referring to FIG. 9, FIG. 9 is a schematic flowchart of an interaction method according to an embodiment of the present disclosure, which is applied to a distributed unit entity. The interaction method includes the following steps.

Step S601, receive an indication message sent by a user equipment UE, where the indication message is used to instruct a plurality of distributed unit entities accessed by the UE to send information to a centralized unit entity CU in parallel.

Step S602, send first information to the CU according to the indication message.

In this embodiment, the centralized unit entity refers to an entity device of the CU, and the distributed unit entity refers to an entity device of the DU.

After accessing a plurality of DUs, the UE may determine that the plurality of DUs send information to the CU in parallel or in series.

In an example, the UE sends indication information to a plurality of accessed DUs, that is, the DUs receive the indication information sent by the UE. If the indication information indicates that the plurality of DUs send information to the CU in parallel, when the plurality of DUs need to interact with the CU, the plurality of DUs send the first information to the CU in parallel.

Step S603, receive second information sent by the CU.

After receiving the first information sent by the plurality of DUs in parallel, the CU sends the second information to each DU uniformly.

In an example, if the plurality of first DUs interact with the CU in a scenario of initial access of the UE, the first information may be initial uplink radio resource control information transmitted to the CU by each first DU after the first DU receives an RRC establishment request, and the second information is downlink radio resource control information transmitted to each first DU by the CU. The initial uplink radio resource control information includes C-RNTI (temporary identifier) and gNB-DU ID allocated to each first DU by the UE, that is, each first DU sends its own C-RNTI and gNB-DU ID to the CU through first information. After receiving the first information, the CU may generate the second information, where the second information includes gNB-CU UE F1AP ID allocated by the CU and an RRC message generated by the CU. The gNB-CU UE F1AP ID refers to an identifier of the F1 application protocol between the CU and the UE, and the RRC message is radio resource control establishment information. After receiving the second information, the plurality of first DUs send the RRC message in the second information to the UE.

In another example, referring to steps 6, 9, 11, 13, 14 and 17 in FIG. 2, the interaction of the signaling between the UE and the AMF is involved, and the function of the plurality of first DUs and the CU is to encapsulate the signaling, and then transparently transmit the encapsulated signaling to the AMF or the UE, and the interaction of the signaling between the CU and the plurality of first DUs is not involved. When the first information is signaling sent by the UE to the CU via the plurality of first DUs, the second information is signaling returned by the AMF to the plurality of first DUs via the CU, and each first DU sends the received signaling sent by the AMF to the UE.

In yet another example, the initial access of the UE may involve RRC reconfiguration, that is, the second information is an RRC reconfiguration message sent by the CU to the plurality of first DUs, and each first DU sends RRC reconfiguration to the CU. After completing the RRC reconfiguration, the UE sends an RRC reconfiguration completion message to each first DU. Each first DU sends the RRC reconfiguration completion message to the CU in parallel, that is, the CU receives an RRC reconfiguration completion message sent by each first DU in parallel.

In addition, an interaction scenario between the plurality of DUs and the CU further includes: the plurality of DUs interacting via the CU, inter-mobility of gNB-DUs and intra-handover of the gNB-DU. In these scenarios, the plurality of DUs may send messages to the CU in parallel. After receiving respective messages, the CU may send a corresponding message to each DU in parallel. Regarding interaction scenarios of sending the message by each DU to the CU in parallel and sending the message by the CU to the plurality of DUs in parallel, reference is made to the embodiments shown in FIG. 3 to FIG. 8 for details, which are not described herein again.

In this embodiment, the DU receives the indication message sent by the UE; based on the indication message, this DU and other DUs accessed by the UE send the first information to the CU in parallel; and then the CU sends the second information to each DU accessed by the UE in parallel. In the interaction scenario between the plurality of DUs and the CU, the CU interacts with the plurality of DUs in parallel, thereby saving an interaction time between the plurality of DUs and the CU, shortening a total interaction time of an interaction scenario between the plurality of DUs and the CU, and further improving the efficiency of achieving the objective of the interaction scenario between the plurality of DUs and the CU.

Referring to FIG. 10, FIG. 10 is a schematic flowchart of an interaction method according to an embodiment of the present disclosure, which is applied to user equipment. The interaction method includes the following steps.

Step S701, send an indication message to a plurality of distributed unit entities DUs accessed by a user equipment, where the indication message is used to instruct the plurality of DUs to send information to a centralized unit entity CU in parallel.

In this embodiment, the centralized unit entity refers to an entity device of the CU, and the distributed unit entity refers to an entity device of the DU.

The UE selects a plurality of DUs for access. In an example, the UE selects the quantity of DUs based on a parameter such as transmission bandwidth, data transmission rate or the like required by the UE. If the UE requires a large transmission bandwidth and a high data transmission rate, the UE selects a large number of DUs for access. If the UE requires a small transmission bandwidth and a low data transmission rate, the UE selects a smaller number of DUs for access.

After the UE accesses the plurality of DUs, an interaction scenario exists between the plurality of DUs and the CU. In an example, data interaction between the UE and the CU needs to be performed through the DUs, and the plurality of DUs need to perform data interaction with the CU. In another example, if the UE needs to change an accessed DU, the DU currently accessed by the UE needs to perform data interaction with the CU, and a plurality of DUs to be accessed by the UE also need to perform interaction with the CU. In addition, in intra-handover of the gNB-DU and the interaction between the respective DUs, the plurality of DUs are required to perform data interaction with the CU.

In a scenario where the plurality of DUs perform data interaction with the CU, the UE sends indication information to each DU, such that in an interaction process between the plurality of DUs and the CU, the plurality of DUs send messages to the CU in parallel, and the CU then feeds back corresponding messages to the plurality of CU in parallel. For the interaction process between the plurality of DUs and the CU and related messages sent in parallel, reference may be made to the embodiments shown in FIG. 4 to FIG. 8, and details are not described herein again.

In this embodiment, the UE sends the indication message to the plurality of accessed DUs, so that the plurality of DUs send information to the CU in parallel, and the CU sends a message to the plurality of DUs in parallel. In the interaction scenario between the plurality of DUs and the CU, the CU interacts with the plurality of DUs in parallel, thereby saving an interaction time between the plurality of DUs and the CU, shortening a total interaction time of an interaction scenario between the plurality of DUs and the CU, and further improving the efficiency of achieving the objective of the interaction scenario between the plurality of DUs and the CU.

An embodiment of the present disclosure provides a centralized unit entity. As shown in FIG. 11, the positioning management entity may include a transceiver 1101, a processor 1102 and a memory 1103.

The transceiver 1101 is configured to receive and send data under a control of the processor 1102.

In FIG. 11, the bus architecture may include any quantity of interconnecting buses and bridges, specifically link together various circuits including one or more memories represented by the processor(s) 1102 and a memory represented by the memory 1103. The bus architecture may also link various other circuits together such as peripherals, voltage regulators, power management circuits or the like, which are well known in the art and, therefore, are not further described herein. A bus interface provides an interface. The transceiver 1101 may be a plurality of components, including a transmitter and a receiver, providing a unit for communicating with various other apparatuses over a transmission medium. The transmission medium includes transmission media such as wireless channels, wired channels, optical cables, etc. The processor 1102 is responsible for managing the bus architecture and general processing, and the memory 1103 can store data used by the processor 1102 when performing an operation.

The processor 1102 may be a central processing unit (Central Processing Unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor may also use a multi-core architecture.

The processor 1102 is configured to execute any method associated with the centralized unit entity provided by the embodiments of the present disclosure according to the obtained executable instructions by invoking the computer program stored in the memory 1103. The processor and memory may also be physically separated.

Specifically, when executing the computer program stored in the memory 1103, the processor 1102 implements the following operations:
receiving first information sent in parallel by a plurality of first distributed unit entities DUs accessed by a user equipment UE; and
sending, to each first DU, second information corresponding to the first DU in parallel.

As an optional implementation, the processor 1102 is further configured to perform the following operations:
determining a plurality pieces of first information to be sent to the first DU; and
determining the second information of the first DU according to the plurality pieces of first information to be sent to the first DU.

As an optional implementation, the processor 1102 is further configured to perform the following operation:
receiving a response message sent in parallel by each first DU.

As an optional implementation, the processor 1102 is further configured to perform the following operation:
receiving an RRC reconfiguration completion message sent in parallel by each first DU.

As an optional implementation, the processor 1102 is further configured to perform the following operations:
receiving a context modification response message of the UE sent in parallel by each first DU;
sending a context establishment request of the UE to a plurality of second DUs in parallel, where the second DUs are DUs to be accessed by the UE;
receiving a context establishment response message of the UE sent in parallel by each second DU; and
sending a radio resource control RRC reconfiguration message to each first DU in parallel.

As an optional implementation, the processor 1102 is further configured to perform the following operations:
receiving an RRC reconfiguration completion message sent in parallel by each second DU;
sending a context release message to each first DU in parallel; and
receiving a context release completion message sent in parallel by each first DU.

As an optional implementation, the processor 1102 is further configured to perform the following operations:
receiving a plurality of interaction messages sent in parallel by the second DUs;
sending the plurality of interaction messages corresponding to the second DUs to each second DU in parallel; and
receiving a response message sent in parallel by each second DU.

As an optional implementation, the processor 1102 is further configured to perform the following operations:
if the UE moves from a first cell to a second cell, allocating a first parameter corresponding to each first DU;
sending in parallel, to each first DU, the first parameter corresponding to the first DU; and
receiving a second parameter sent in parallel by each first DU, and re-establishing connection with each first DU;
where the first parameter is used for the first DU to send data to the centralized unit entity having the re-established connection with the first DU, and the second parameter is used for the centralized unit entity to send data to the first DU having the re-established connection with the centralized unit entity.

As an optional implementation, the processor 1102 is further configured to perform the following operations:
if the UE is handed over from the plurality of accessed first DUs to a plurality of third DUs, allocating a third parameter to each third DU, where each third DU and each first DU are located in the same cell;
sending in parallel, to each third DU, the third parameter corresponding to the third DU; and
receiving a fourth parameter sent in parallel by each third DU, and re-establishing connection with each first DU;
where the third parameter is used for the first DU to send data to the centralized unit entity having the re-established connection with the first DU, and the fourth parameter is used for the centralized unit entity to send data to the first DU having the re-established connection with the centralized unit entity.

It should be noted that, the foregoing centralized unit entity provided by the present disclosure can implement all method steps implemented by the foregoing embodiments of the interaction method, the same technical effects can be achieved, and details about the same parts and beneficial effects as the method embodiments are not described in this embodiment again.

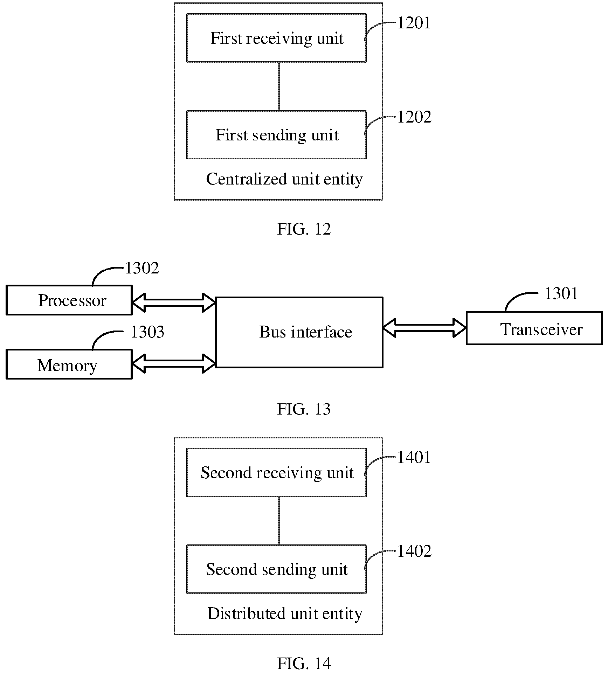

An embodiment of the present disclosure provides a centralized unit entity. As shown in FIG. 12, the centralized unit entity includes:
a first receiving unit 1201, configured to receive first information sent in parallel by a plurality of first distributed unit entities DUs accessed by a user equipment UE; and
a first sending unit 1202, configured to send, to each first DU, second information corresponding to the first DU in parallel.

As an optional implementation, the centralized unit entity further includes:
a determining unit, configured to determine a plurality pieces of first information to be sent to the first DU; and
a determining unit, configured to determine the second information of the first DU according to the plurality pieces of first information to be sent to the first DU.

As an optional implementation, the centralized unit entity further includes:
a first receiving unit 1201, configured to receive a response message sent in parallel by each first DU.

As an optional implementation, the centralized unit entity further includes:
a first receiving unit 1201, configured to receive an RRC reconfiguration completion message sent in parallel by each first DU.

As an optional implementation, the centralized unit entity further includes:
a first receiving unit 1201, configured to receive a context modification response message of the UE sent in parallel by each first DU;
a first sending unit 1202, configured to send a context establishment request of the UE to a plurality of second DUs in parallel, where the second DUs are DUs to be accessed by the UE;
a first receiving unit 1201, configured to receive a context establishment response message of the UE sent in parallel by each second DU; and
a first sending unit 1202, configured to send a radio resource control RRC reconfiguration message to each first DU in parallel.

As an optional implementation, the centralized unit entity further includes:
a first receiving unit 1201, configured to receive an RRC reconfiguration completion message sent in parallel by each second DU;
a first sending unit 1202, configured to send a context release message to each first DU in parallel; and
a first receiving unit 1201, configured to receive a context release completion message sent in parallel by each first DU.

As an optional implementation, the centralized unit entity further includes:
a first receiving unit 1201, configured to receive a plurality of interaction messages sent in parallel by the second DUs;
a first sending unit 1202, configured to send the plurality of interaction messages corresponding to the second DUs to each second DU in parallel; and
a first receiving unit 1201, configured to receive a response message sent in parallel by each second DU.

As an optional implementation, the centralized unit entity further includes:
an allocating unit, configured to, if the UE moves from a first cell to a second cell, allocate a first parameter corresponding to each first DU;
a first sending unit 1202, configured to send in parallel, to each first DU, the first parameter corresponding to the first DU; and
a first receiving unit 1201, configured to receive a second parameter sent in parallel by each first DU, and re-establishing connection with each first DU, where the first parameter is used for the first DU to send data to the centralized unit entity having the re-established connection with the first DU, and the second parameter is used for the centralized unit entity to send data to the first DU having the re-established connection with the centralized unit entity.

As an optional implementation, the centralized unit entity further includes:
an allocating unit, configured to, if the UE is handed over from the plurality of accessed first DUs to a plurality of third DUs, allocate a third parameter to each third DU;
a first sending unit 1202, configured to send in parallel, to each third DU, the third parameter corresponding to the third DU; and
a first receiving unit 1201, configured to receive a fourth parameter sent in parallel by each third DU, and re-establishing connection with each first DU, where the third parameter is used for the first DU to send data to the centralized unit entity having the re-established connection with the first DU, and the fourth parameter is used for the centralized unit entity to send data to the first DU having the re-established connection with the centralized unit entity.

It should be noted that, the foregoing centralized unit entity provided by the present disclosure can implement all method steps implemented by the foregoing embodiments of the interaction method, the same technical effects can be achieved, and details about the same parts and beneficial effects as the method embodiments are not described in this embodiment again.

An embodiment of the present disclosure provides a distributed unit entity. As shown in FIG. 13, the distributed unit entity may include a transceiver 1301, a processor 1302, and a memory 1303.

The transceiver 1301 is configured to receive and send data under a control of the processor 1302.

In FIG. 13, the bus architecture may include any quantity of interconnecting buses and bridges, specifically link together various circuits including one or more memories represented by the processor(s) 1302 and a memory represented by the memory 1303. The bus architecture may also link various other circuits together such as peripherals, voltage regulators, power management circuits or the like, which are well known in the art and, therefore, are not further described herein. A bus interface provides an interface. The transceiver 1301 may be a plurality of components, including a transmitter and a receiver, providing a unit for communicating with various other apparatuses over a transmission medium. The transmission medium includes transmission media such as wireless channels, wired channels, optical cables, etc. The processor 1302 is responsible for managing the bus architecture and general processing, and the memory 1303 can store data used by the processor 1302 when performing an operation.

The processor 1302 may be a central processing unit (Central Processing Unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor may also use a multi-core architecture.

The processor 1302 is configured to execute any method for positioning a reference device provided by the embodiments of the present disclosure according to the obtained executable instructions by invoking a computer program stored in the memory 1303. The processor and memory may also be physically separated.

Specifically, when executing the computer program stored in the memory 1303, the processor 1302 implements the following operations:
receiving an indication message sent by a user equipment UE, to instruct a plurality of distributed unit entities accessed by the UE to send information to a centralized unit entity CU in parallel;
sending first information to the CU according to the indication message; and
receiving second information sent by the CU.

It should be noted that, the foregoing distributed unit entity provided by the present disclosure can implement all method steps implemented by the foregoing embodiments of the interaction method, the same technical effects can be achieved, and details about the same parts and beneficial effects as the method embodiments are not described in this embodiment again.

An embodiment of the present disclosure provides a distributed unit entity. As shown in FIG. 14, the distributed unit entity includes:
a second receiving unit 1401, configured to receive an indication message sent by a user equipment UE, where the indication message is used to instruct a plurality of distributed unit entities accessed by the UE to send information to a centralized unit entity CU in parallel; and
a second sending unit 1402, configured to send first information to the CU according to the indication message;
the second receiving unit 1401 is further configured to receive second information sent by the CU.

It should be noted that, the distributed unit entity provided by the present disclosure can implement all method steps implemented by the foregoing embodiments of the interaction method, the same technical effects can be achieved, and details about the same parts and beneficial effects as the method embodiments are not described in this embodiment again.

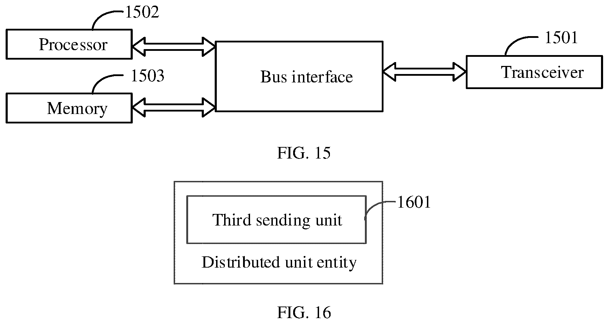

An embodiment of the present disclosure provides a user equipment. As shown in FIG. 15, the user equipment may include a transceiver 1501, a processor 1502, and a memory 1503.

The transceiver 1501 is configured to receive and send data under a control of the processor 1502.

In FIG. 15, the bus architecture may include any quantity of interconnected buses and bridges, specifically link together various circuits including one or more memories represented by the processor(s) 1502 and a memory represented by the memory 1503. The bus architecture may also link various other circuits together such as peripherals, voltage regulators, power management circuits or the like, which are well known in the art and, therefore, are not further described herein. A bus interface provides an interface. The Transceiver 1501 may be a plurality of components, including a transmitter and a receiver, providing a unit for communicating with various other apparatuses over a transmission medium. The transmission medium includes transmission media such as wireless channels, wired channels, optical cables, etc. The processor 1502 is responsible for managing the bus architecture and general processing, and the memory 1503 can store data used by the processor 1502 when executing an operation.

The processor 1502 may be a central processing unit (Central Processing Unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor may also use a multi-core architecture.

The processor 1502 is configured to execute, according to the obtained executable instructions, any method associated with the user equipment provided by the embodiments of the present disclosure by invoking a computer program stored in the memory 1503. The processor and memory may also be physically separated.

Specifically, when executing the computer program stored in the memory 1503, the processor 1502 implements the following operations:
sending an indication message to a plurality of distributed unit entities DUs accessed by a user equipment, where the indication message is used to instruct the plurality of DUs to send information to a centralized unit entity CU in parallel.

It should be noted that, the user equipment provided by the present disclosure can implement all method steps implemented by the foregoing embodiments of the interaction method, the same technical effects can be achieved, and details about the same parts and beneficial effects as the method embodiments are not described in this embodiment again.

An embodiment of the present disclosure provides a user equipment. As shown in FIG. 16, the user equipment includes:
a third sending unit 1601, configured to send an indication message to a plurality of distributed unit entities DUs accessed by a user equipment, where the indication message is used to instruct the plurality of DUs to send information to a centralized unit entity CU in parallel.

It should be noted that, the user equipment provided by the present disclosure can implement all method steps implemented by the foregoing embodiments of the interaction method, the same technical effects can be achieved, and details about the same parts and beneficial effects as the method embodiments are not described in this embodiment again.

It should be noted that, the division of the units in the embodiments of the present disclosure is exemplary, and is merely a logical function division, and there may be other division manners in practical implementation. In addition, respective functional units in the embodiments of the present disclosure may be integrated into one processing unit, or each unit may exist alone physically, or two or more units are integrated into one unit. The integrated unit may be implemented in a form of hardware, and may also be implemented in a form of a software functional unit.

When being implemented in the form of a software functional unit and sold or used as an independent product, the integrated unit may be stored in a processor-readable storage medium. Based on such understanding, the technical solutions of the present disclosure essentially, or the part contributing to the prior art, or all or a part of the technical solutions may be implemented in a form of a software product. The computer software product is stored in a storage medium and includes several instructions for instructing a computer device (which may be a personal computer, a server, or a network device, etc.) or a processor to execute all or a part of the steps of the methods in the embodiments of the present disclosure. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disk, etc.

An embodiment of the present disclosure provides a processor-readable storage medium. The processor-readable storage medium stores a computer program, where the computer program is used to enable a processor to execute any method provided by the embodiments of the present disclosure associated with a centralized unit entity, a distributed unit entity or a user equipment. In this way, the processor can implement all method steps implemented by the centralized unit entity, the distributed unit entity, or the user equipment in the foregoing method embodiments, the same technical effects can be achieved, and details about the same parts and beneficial effects as the method embodiments are not described in this embodiment again.

The processor-readable storage medium may be any available medium or data storage device that can be accessed by the processor, including but not limited to a magnetic memory (such as a floppy disk, a hard disk, a magnetic tape, a magnetooptical disk (MO), etc.), an optical memory (such as a CD, a DVD, a BD, an HVD, etc.), and a semiconductor memory (such as a ROM, an EPROM, an EEPROM, a nonvolatile memory (NAND FLASH), a solid state disk (SSD)), etc.

Embodiments of the present disclosure provide a computer program product including instructions that, when executed on a computer, cause the computer to execute all the method steps implemented by the centralized unit entity, the distributed unit entity or the user equipment in the above method embodiments, the same technical effect can be achieved, and the same parts and beneficial effects as the method embodiments are not described in this embodiment again.

Those skilled in the art should understand that, the embodiments of the present disclosure can be provided as a method, a positioning management entity or a computer program product. Therefore, the present disclosure may take the form of an entirely hardware embodiment, an entirely software embodiment or an embodiment combining embodiments of software and hardware aspects. Furthermore, the present disclosure may take the form of a computer program product embodied on one or more computer-usable storage media (including, but not limited to, magnetic disk storage, optical storage, etc.) containing computer-usable program codes.

The present disclosure is described with reference to flowcharts and/or block diagrams of a method, a positioning management entity, and a computer program product according to embodiments of the present disclosure. It should be understood that, each flow and/or block in the flowcharts and/or block diagrams and combinations of flows and/or blocks in the flowcharts and/or block diagrams can be implemented by computer-executable instructions. The computer-executable instructions may be provided to a processor of a general purpose computer, a special purpose computer, an embedded processor or other programmable data processing devices to produce a machine, enabling instructions executed by a processor of a computer or other programmable data processing devices to generate an apparatus for implementing the functions specified in one or more processes in the flowcharts and/or one or more blocks in the block diagrams.

These processor-executable instructions may also be stored in a processor-readable memory that can guide a computer or other programmable data processing device to function in a particular manner, causing the instructions stored in the processor-readable memory to produce an article of manufacture including an instruction apparatus. The instruction apparatus implements functions specified in one or more processes in the flowcharts and/or one or more blocks in the block diagrams.

These processor-executable instructions may also be loaded onto a computer or other programmable data processing device, causing a series of operational steps to be performed on a computer or other programmable devices to produce a computer-implemented process. Thus, the instructions executed on the computer or other programmable devices provide steps for implementing the functions specified in one or more processes in the flowcharts and/or one or more blocks in the block diagrams.

Obviously, those skilled in the art can make various modifications and variations to the present disclosure without departing from the spirit and scope of the present disclosure. As such, if these modifications and variations of the present disclosure belong to the scope of the claims of the present disclosure and the equivalents thereof, the present disclosure is intended to include these modifications and variations.

## Claims

1. An interaction method, applied to a centralized unit entity, and comprising:
receiving first information sent in parallel by a plurality of first distributed unit entities DUs accessed by a user equipment UE; and
sending, to each first DU, second information corresponding to the first DU in parallel.

2. The method according to claim 1, before the sending, to each first DU, the second information corresponding to the first DU in parallel, further comprising:
determining a plurality pieces of first information to be sent to the first DU; and
determining the second information of the first DU according to the plurality pieces of first information to be sent to the first DU.

3. The method according to claim 2, the sending, to each first DU, the second information corresponding to the first DU in parallel, further comprising:
receiving a response message sent in parallel by each first DU.

4. The method according to claim 1, wherein the second information is an RRC reconfiguration message, and after the sending, to each first DU, the second information corresponding to the first DU in parallel, the method further comprises:
receiving an RRC reconfiguration completion message sent in parallel by each first DU.

5. The method according to claim 1, wherein the plurality of first DUs are DUs currently accessed by the UE, and the sending, to each first DU, the second information corresponding to the first DU in parallel, the method further comprises:
receiving a context modification response message of the UE sent in parallel by each first DU;
sending a context establishment request of the UE to a plurality of second DUs in parallel, wherein the second DUs are DUs to be accessed by the UE;
receiving a context establishment response message of the UE sent in parallel by each second DU; and
sending a radio resource control RRC reconfiguration message to each first DU in parallel.

6. The method according to claim 5, after the sending the radio resource control RRC reconfiguration message to each first DU in parallel, further comprising:
receiving an RRC reconfiguration completion message sent in parallel by each second DU;
sending a context release message to each first DU in parallel; and
receiving a context release completion message sent in parallel by each first DU.

7. The method according to claim 6, after the receiving the RRC reconfiguration completion message sent in parallel by each second DU, further comprising:
receiving a plurality of interaction messages sent in parallel by the second DUs;
sending the plurality of interaction messages corresponding to the second DUs to each second DU in parallel; and
receiving a response message sent in parallel by each second DU.

8. The method according to claim 1, further comprising:
if the UE moves from a first cell to a second cell, allocating a first parameter corresponding to each first DU;
sending in parallel, to each first DU, the first parameter corresponding to the first DU; and
receiving a second parameter sent in parallel by each first DU, and re-establishing connection with each first DU;
wherein the first parameter is used for the first DU to send data to the centralized unit entity having the re-established connection with the first DU, and the second parameter is used for the centralized unit entity to send data to the first DU having the re-established connection with the centralized unit entity.

9. The method according to claim 1, further comprising:
if the UE is handed over from the plurality of accessed first DUs to a plurality of third DUs, allocating a third parameter to each third DU, wherein each third DU and each first DU are located in the same cell;
sending in parallel, to each third DU, the third parameter corresponding to the third DU; and
receiving a fourth parameter sent in parallel by each third DU, and re-establishing connection with each first DU;
wherein the third parameter is used for the first DU to send data to the centralized unit entity having the re-established connection with the first DU, and the fourth parameter is used for the centralized unit entity to send data to the first DU having the re-established connection with the centralized unit entity.

10. An interaction method, applied to a distributed unit entity, and comprising:
receiving an indication message sent by a user equipment UE, wherein the indication message is used to instruct a plurality of distributed unit entities accessed by the UE to send information to a centralized unit entity CU in parallel;
sending first information to the CU according to the indication message; and
receiving second information sent by the CU.

11. An interaction method, applied to user equipment, and comprising:
sending an indication message to a plurality of distributed unit entities DUs accessed by a user equipment, wherein the indication message is used to instruct the plurality of DUs to send information to a centralized unit entity CU in parallel.

12. A centralized unit entity, comprising: a memory, a transceiver and a processor, wherein the memory is configured to store a computer program; the transceiver is configured to receive and send data under a control of the processor; and the processor is configured to read the computer program in the memory and perform the following operations:
receiving first information sent in parallel by a plurality of first distributed unit entities DUs accessed by a user equipment UE; and
sending, to each first DU, second information corresponding to the first DU in parallel.

13. A centralized unit entity, comprising:
a first receiving unit, configured to receive first information sent in parallel by a plurality of first distributed unit entities DUs accessed by a user equipment UE; and
a first sending unit, configured to send, to each first DU, second information corresponding to the first DU in parallel.

14. A distributed unit entity, comprising: a memory, a transceiver and a processor, wherein the memory is configured to store a computer program; the transceiver is configured to receive and send data under a control of the processor; and the processor is configured to read the computer program in the memory and perform the following operations:
receiving an indication message sent by a user equipment UE, wherein the indication message is used to instruct a plurality of distributed unit entities accessed by the UE to send information to a centralized unit entity CU in parallel;
sending first information to the CU according to the indication message; and
receiving second information sent by the CU.

15. A distributed unit entity, comprising:
a second receiving unit, configured to receive an indication message sent by a user equipment UE, wherein the indication message is used to instruct a plurality of distributed unit entities accessed by the UE to send information to a centralized unit entity CU in parallel; and
a second sending unit, configured to send first information to the CU according to the indication message;
the second receiving unit is further configured to receive second information sent by the CU.

16. A user equipment, comprising: a memory, a transceiver and a processor, wherein the memory is configured to store a computer program; the transceiver is configured to receive and send data under a control of the processor; and the processor is configured to read the computer program in the memory and perform the following operations:
sending an indication message to a plurality of distributed unit entities DUs accessed by a user equipment, wherein the indication message is used to instruct the plurality of DUs to send information to a centralized unit entity CU in parallel.

17. A user equipment, comprising:
a third sending unit, configured to send an indication message to a plurality of distributed unit entities DUs accessed by a user equipment, wherein the indication message is used to instruct the plurality of DUs to send information to a centralized unit entity CU in parallel.

18. A processor-readable storage medium, wherein the processor-readable storage medium stores a computer program, and the computer program is used to enable the processor to execute the method according to any one of claims 1 to 11.
